# FASCICULE DE BREVET EUROPEEN

(11) **EP 1 538 718 B1**
(45) Date de publication et mention de la délivrance du brevet: **14.07.2010**
(21) Numéro de dépôt: 04360102.0
(22) Date de dépôt: 30.11.2004
(51) Int. Cl.: H02G 3/12, H02G 3/18

(54) **Dispositif de rappel des griffes**
Spreizkrallenrückstelleinrichtung
Mounting claws return mechanism

(30) Priorité: 04.12.2003 FR 0314261
(43) Date de publication de la demande: 08.06.2005
(73) Titulaire: HAGER CONTROLS, 67700 Saverne (FR)
(72) Inventeur: Koch, Albert, 67320 Bettwiller (FR); Schini, Jean-Claude, 67440 Marmoutier (FR)
(74) Mandataire: Nuss, Pierre

(56) Documents cités:
- DE-U- 20 013 233

## Description

La présente invention concerne le domaine des appareillages électriques, domestiques, semi-encastrés, tels que les prises de courant, les interrupteurs, les détecteurs infrarouges, ... qui sont fixés dans des boîtes d'encastrement par l'intermédiaire de griffes et a pour objet un dispositif de rappel des griffes en vue du démontage.

Actuellement, les griffes de fixation de tels appareillages, qui sont destinées à s'accrocher dans les parois correspondantes des boîtes d'encastrement sous l'effet d'un serrage par vis ayant tendance à faire pivoter ces griffes en direction desdites parois, sont généralement rappelées en position de repos par l'intermédiaire de moyens élastiques tels qu'une bande élastique entourant totalement l'appareillage et s'appuyant sur les faces externes des griffes, soit encore au moyen de dispositifs à ressort tels que des lames de ressorts de flexion rivetées sur les griffes ou encore par des ressorts de torsion agissant sur lesdites griffes.

Les moyens élastiques de rappel présentent essentiellement l'inconvénient d'un vieillissement très rapide entraînant leur destruction, de sorte qu'ils sont généralement inopérants lorsqu'un démontage de l'appareillage doit être effectué.

Les dispositifs de rappel à ressort, tels que des lames rivetées sur les griffes, sont notamment connus par DE-A-38 23 117 et présentent l'inconvénient de fournir une solution relativement complexe et onéreuse au problème posé.

Enfin, le montage de ressorts de torsion ou de flexion, tel qu'il est proposé par FR-A-2 770 937, est généralement difficile à réaliser et il existe un risque de dégradation du ressort par dépassement de sa limite élastique.

Il a également été proposé des montages de griffes clipsées dans une position rétractée et qui coopèrent avec les parois des boîtiers de montage suite à un serrage par vissage, mais de telles griffes ne permettent pas un rappel automatique en vue de leur dégagement.

Par ailleurs, il a aussi été prévu de monter des griffes en appui contre des languettes flexibles des boîtiers. Cependant, dans un tel cas, les languettes subissent assez rapidement une déformation conduisant à une dégradation de leur fonction de rappel en position des griffes.

On connaît également par DE-200 13 233 U un dispositif de rappel des griffes pour appareillage semi-encastré, électrique, domestique, tel qu'une prise de courant ou une prise informatique munie de griffes de fixation dans une boîte d'encastrement, dont chaque griffe est pourvue de dents destinées à pénétrer dans la paroi de la boîte d'encastrement et d'un dispositif de rappel. Ce dispositif de rappel se présente essentiellement, pour chaque griffe, sous forme d'un ressort-fil constitué par un élément plié d'un seul tenant, comportant une partie supérieure recourbée en anse et destinée à coopérer avec un moyen d'actionnement de la griffe et une partie inférieure dans laquelle est accrochée la partie inférieure de la griffe en vue de son rappel.

Un tel dispositif ne permet, cependant, pas un montage facile et rapide sur un appareillage et risque de se dégrader rapidement en cas de multiples manoeuvres.

La présente invention a pour but de pallier ces inconvénients en proposant objet un dispositif de rappel des griffes en vue du démontage qui soit simple à monter, de fabrication peu onéreuse et qui ne risque pas de se dégrader dans le temps.

A cet effet, elle a pour objet un dispositif de rappel des griffes en vue du démontage, pour des appareillages électriques, domestiques, semi-encastrés tels que les prises de courant, les interrupteurs, les détecteurs infrarouges, etc.., fixés dans des boîtes d'encastrement par l'intermédiaire de griffes, selon la revendication 1.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une vue en perspective d'un appareillage électrique muni d'un dispositif de rappel des griffes, en position de démontage, les griffes étant rabattues contre le corps de l'appareillage ;
la figure 2 est une vue analogue à celle de la figure 1 de l'appareillage, en position de service des griffes, et
la figure 3 est une vue en perspective du dispositif conforme à l'invention.

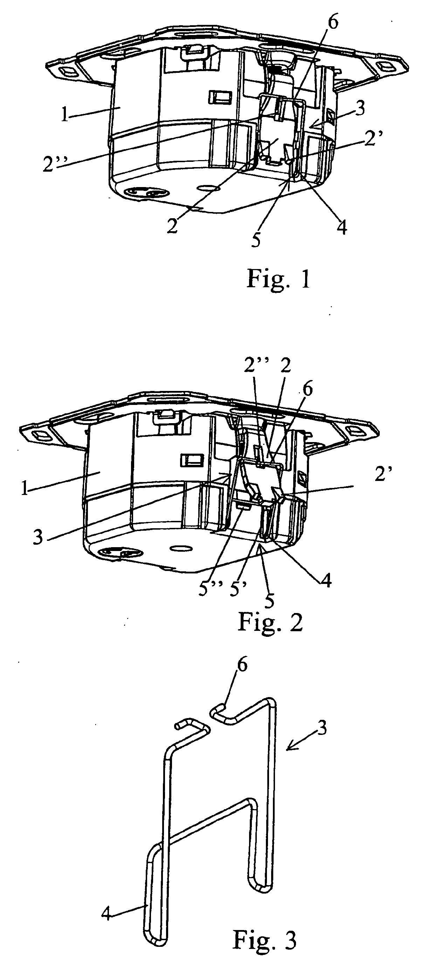

Les figures 1 et 2 des dessins annexés représentent un appareillage semi-encastré, électrique, domestique, tel qu'une prise de courant ou une prise informatique 1 munie de griffes 2 de fixation dans une boîte d'encastrement, non représentée, chaque griffe étant pourvue de dents 2' destinées à pénétrer dans la paroi de la boîte d'encastrement et d'un dispositif de rappel 3. Sur les figures 1 et 2 des dessins qui représentent un appareillage dans une vue en perspective latérale par le dessous, seul une griffe 2 est visible. Toutefois, de manière connue, un tel appareillage est toujours fixé au moyen de deux griffes diamétralement opposées et actionnées par vis.

Conformément à l'invention, le dispositif de rappel 3 des griffes 2 se présente essentiellement, pour chaque griffe 2, sous forme d'un ressort-fil 3 muni d'un premier moyen 4 de montage par encliquetage dans un logement 5 correspondant de l'appareillage et d'un second moyen 6 de montage par encliquetage sur la griffe correspondante 2.

Le ressort-fil formant le dispositif de rappel 3 (figure 3) se présente avantageusement sous forme d'un élément plié d'un seul tenant comportant une partie inférieure constituant le premier moyen de montage par encliquetage 4, qui est sous forme d'une pièce en U dont les extrémités des ailes sont recourbées et prolongées parallèlement par des bras formant le corps du dispositif 3, lesdits bras étant recourbés à leur extrémité parallèlement à l'âme du U formant le premier moyen de montage par encliquetage 4 pour former le second moyen de montage par encliquetage 6 qui est constitué par des crochets recourbés en direction inverse des parties recourbées des bras formant le corps du dispositif 3.

Chaque logement 5 destiné à coopérer pour l'encliquetage avec le premier moyen de montage par encliquetage 4 est constitué par un évidemment de la paroi de l'appareillage 1 délimité par des rainures 5' (figure 2) et par une patte d'accrochage 5" en saillie dans le logement 5 entre les rainures 5'. La surface de maintien de la patte d'accrochage 5" est avantageusement située à une distance de l'extrémité opposée des rainures 5' légèrement supérieure à la longueur des bras du U formant le premier moyen de montage par encliquetage 4.

Ainsi, le ressort-fil formant le dispositif 3 peut être encliqueté dans le logement 5 du corps 1 de l'appareillage par introduction des ailes du U formant le premier moyen de montage par encliquetage 4 dans les rainures 5' du logement 5, puis par enclenchement de son âme avec la patte d'accrochage 5" suite à une déformation élastique de l'ensemble du U en fin d'introduction du premier moyen de montage par encliquetage 4 dans le logement 5.

Les crochets recourbés formant le second moyen 6 de montage par encliquetage sur la griffe correspondante 2 coopèrent avec un évidemment allongé 2" de la griffe 2, dont la largeur est légèrement supérieure à la partie recourbée des crochets 6 s'étendant parallèlement aux parties recourbées des bras formant le corps du dispositif 3. Cet évidemment 2" s'étend avantageusement dans une zone rétrécie de la griffe 2 éloignée de celle d'extrémité comportant les dents 2' destinées à s'engager dans les parois de la boîte d'encastrement 2, près de son extrémité d'actionnement par vis.

Selon une autre caractéristique de l'invention, les bras formant le corps du dispositif 3 et reliant le premier moyen de montage par encliquetage 4 sur le corps 1 de l'appareillage et le second moyen de montage par encliquetage 6 sur la griffe 2 présentent avantageusement un écartement légèrement supérieur à la plus grande largeur de la griffe 2, qui s'étend entre les dents 2' et la partie rétrécie comportant l'évidemment 2".

Ainsi, pour l'encliquetage des crochets 6, ceux-ci sont enclenchés dans l'évidemment 2" par introduction simultanée après un rapprochement desdits crochets 6 les amenant à se recouvrir mutuellement, par appui sur les bras formant le corps du dispositif 3, le relâchement de la pression sur les bras, consécutivement à l'introduction des crochets ayant pour conséquence la fixation sur la griffe 2.

Du fait même de la constitution du dispositif 3 présentant des bras s'étendant de part et d'autre de la griffe 2 et entourant intimement celle-ci sur sa partie de plus grande largeur, chaque griffe 2 est maintenue latéralement par les dispositifs 3, de sorte que tant lors des opérations de fixation que lors des opérations de démontage, les griffes 2 se déplacent parfaitement perpendiculairement à la paroi correspondante du corps 1 de l'appareillage.

En outre, la constitution du dispositif 3 conformément à l'invention permet une réalisation sous un faible encombrement et une grande simplicité de montage et éventuellement de démontage du dispositif 3 qui assure, par ailleurs, une bonne limitation de la course de la griffe 2.

Lors du serrage de la vis d'actionnement de la griffe 2, le ressort formant le dispositif 3 est tendu et sollicité à la flexion au niveau de la jonction des bras formant le corps du dispositif 3 avec le premier moyen de montage par encliquetage 4. Compte tenu de la taille relativement importante du dispositif 3, l'effort de flexion résultant est relativement faible, de sorte que la dégradation par fatigue dudit dispositif 3 est quasiment insignifiante. Lors d'un desserrage de la vis d'actionnement de la griffe 2, le dispositif 3 rappelle ladite griffe dans sa position représentée à la figure 1.

Grâce à l'invention, il est possible de réaliser un dispositif de rappel de griffes pour appareillages électriques, domestiques semi-encastrés à monter dans des boîtes d'encastrement, d'une grande fiabilité dans le temps et permettant un guidage précis des griffes tant lors du serrage que lors du desserrage de celles-ci.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention tel que défini par les revendications.

## Revendications

1. Dispositif (3) de rappel des griffes (2) pour appareillage semi-encastré, électrique, domestique, tel qu'une prise de courant ou une prise informatique (1) munie de griffes (2) de fixation dans une boîte d'encastrement, chaque griffe étant pourvue de dents (2') destinées à pénétrer dans la paroi de la boîte d'encastrement et d'un dispositif de rappel (3), se présentant essentiellement, pour chaque griffe (2), sous forme d'un ressort-fil (3) constitué par un élément plié d'un seul tenant, **caractérisé en ce que** ledit ressort-fil (3) est muni d'un premier moyen (4) de montage par encliquetage dans un logement (5) correspondant de l'appareillage et d'un second moyen (6) de montage par encliquetage sur la griffe correspondante (2), et **en ce que** ledit ressort-fil (3) comportant une partie inférieure constituant le premier moyen de montage par encliquetage (4) sur le corps (1) de l'appareillage, qui est sous forme d'une pièce en U, comportant une âme et des ailes et dont les extrémités des ailes sont recourbées et prolongées parallèlement à cesdites ailes par des bras formant le corps du dispositif (3), lesdits bras étant recourbés à leur extrémité vers l'intérieur et parallèlement à l'âme du U formant le premier moyen de montage par encliquetage (4) pour former le second moyen de montage par encliquetage (6) sur la griffe (2) qui est constitué par des crochets recourbés en direction inverse de la partie recourbée des bras formant le corps du dispositif (3).

2. Dispositif, suivant la revendication 1, **caractérisé en ce que** chaque logement (5) destiné à coopérer pour l'encliquetage avec le premier moyen d'encliquetage (4) est constitué par un évidemment de la paroi de l'appareillage (1) délimité par des rainures (5') et par une patte d'accrochage (5") en saillie dans le logement (5) entre les rainures (5').

3. Dispositif, suivant la revendication 2, **caractérisé en ce que** la surface de maintien de la patte d'accrochage (5") est située à une distance de l'extrémité opposée des rainures (5') légèrement supérieure à la longueur des bras du U formant le premier moyen d'encliquetage (4).

4. Dispositif, suivant la revendication 1, **caractérisé en ce que** les crochets recourbés formant le second moyen (6) de montage par encliquetage sur la griffe correspondante (2) coopèrent avec un évidemment allongé (2") de la griffe (2), dont la largeur est légèrement supérieure à la partie recourbée des crochets (6) s'étendant parallèlement aux parties recourbées des bras formant le corps du dispositif (3).

5. Dispositif, suivant la revendication 4, **caractérisé en ce que** l'évidemment (2") s'étend avantageusement dans une zone rétrécie de la griffe (2) éloignée de celle d'extrémité comportant les dents (2') destinées à s'engager dans les parois de la boîte d'encastrement (2), près de son extrémité d'actionnement par vis.

6. Dispositif, suivant l'une quelconque des revendications 1 et 5, **caractérisé en ce que** les bras formant le corps du dispositif (3) et reliant le premier moyen de montage par encliquetage (4) sur le corps (1) de l'appareillage et le second moyen de montage par encliquetage (6) sur la griffe (2) présentent un écartement légèrement supérieur à la plus grande largeur de la griffe (2), qui s'étend entre les dents (2') et la partie rétrécie comportant l'évidemment (2").

## Claims

1. Device (3) for returning grips (2) for semi-embedded, electrical, domestic equipment, such as a wall socket or computer socket (1), which is provided with grips (2) for securing to a housing shell, each grip being provided with teeth (2') designed to penetrate into the wall of the housing shell and a return device (3), which is essentially, for each grip (2), in the form of a spring wire (3) formed by an element folded from a single piece, **characterised in that** said spring wire (3) is provided with a first means (4) of assembly by snap fitting into a corresponding compartment (5) of the equipment and a second means (6) for mounting by snap fitting in the corresponding grip (2), and **in that** said spring wire (3) comprises a lower part forming the first means of assembly by snap fitting (4) on the body (1) of the equipment, which is in the form of a U-shaped element, comprising a core and wings, the ends of the wings being curved and extended parallel to said wings by arms forming the body of the device (3), said arms being curved at their ends towards the inside and parallel to the core of the U forming the first means of assembly by snap fitting (4) to form the second means of assembly by snap fitting (6) with the grip (2), which is formed by hooks curved in inverse direction to the curved part of arms forming the body of the device (3).

2. Device according to claim 1, **characterised in that** each compartment (5) designed to cooperate by snap fitting with the first snap fit means (4) is formed by a cutout in the wall of the equipment (1) delimited by grooves (5') and by a connecting tab (5") projecting into the compartment (5) between the grooves (5').

3. Device according to claim 2, **characterised in that** the holding surface of the connecting tab (5") is located at a distance from the opposite end of the grooves (5') slightly greater than the length of the arms of the U forming the first snap fit means (4).

4. Device according to claim 1, **characterised in that** the curved hooks forming the second assembly means (6) by snap fitting with the corresponding grip (2) cooperate with an elongated cutout (2") of the grip (2), the width of which is slightly greater than the curved part of the hooks (6) extending parallel to the curved parts of the arms forming the body of the device (3).

5. Device according to claim 4, **characterised in that** the cutout (2") extends preferably into a narrow area of the grip (2) spaced apart from the end area comprising the teeth (2') designed to engage with or in the walls of the housing shell (2), close to it screw-activated end.

6. Device according to any one of claims 1 and 5, **characterised in that** the arms forming the body of the device (3) and connecting the first means of assembly by snap fitting (4) onto the body (1) of the equipment and the second means of assembly by snap fitting (6) onto the grip (2) are spaced apart slightly further than the greatest width of the grip (2), which extends between the teeth (2') and the narrow part comprising the cutout (2").

## Patentansprüche

1. Vorrichtung (3) zum Zurückstellen von Krallen (2) an Elektroinstallationsgeräten mit einem Teilgehäuse, wie etwa einer Starkstromsteckdose oder einer Datensteckdose (1), welche mit Spreizkrallen (2) zum Fixieren in einer Einbaudose versehen sind, wobei jede Spreizkralle mit Zähnen (2') versehen ist, die in die Wand der Einbaudose eindringen sollen, und mit einer Rückstellvorrichtung (3), die sich für jede Spreizkralle (2) im Wesentlichen in Form einer Drahtfeder (3) darstellt, welche aus einem einzigen gefalteten Element gebildet ist, **dadurch gekennzeichnet, dass** die Drahtfeder (3) mit einem ersten Rastmontagemittel (4) in einen entsprechenden Sitz (5) der Einrichtung und einem zweiten Rastmontagemittel (6) an der entsprechenden Spreizkralle (2) versehen ist, wobei diese Drahtfeder (3) einen unteren Abschnitt aufweist, der das erste Rastmontagemittel (4) an dem Gehäuse (1) des Elektroinstallationsgeräts bildet und die Form eines U besitzt, welches einen Steg und Schenkel aufweist, wobei die Schenkelenden umgebogen und parallel zu den Schenkeln durch Arme verlängert sind, die den Körper der Vorrichtung (3) bilden, wobei die Arme an ihren Enden nach innen und parallel zu dem U-Steg, welcher das erste Rastmontagemittel (4) bildet, gebogen sind, um das zweite Rastmontagemittel (6), welches durch Haken gebildet wird, die entgegengesetzt zu dem gebogenen Abschnitt der Arme gebogen sind, an der Spreizkralle (2) zu bilden, das den Körper der Vorrichtung (3) bildet.

2. Vorrichtung nach Anspruch 1, **dadurch gekennzeichnet, dass** jeder Sitz (5), der zum Einrasten mit dem ersten Rastmittel (4) ausgelegt ist, durch eine Aussparung in der Wand des Elektroinstallationsgeräts (1), die von Nuten (5') und durch eine in den Sitz (5) vorspringende Rastnase (5") zwischen den Nuten (5') begrenzt ist, gebildet ist.

3. Vorrichtung nach Anspruch 2, **dadurch gekennzeichnet, dass** die Haltefläche der Rastnase (5") in einem Abstand von dem gegenüberliegenden Ende der Nuten (5') gelegen ist, der etwas größer ist als die Länge der Arme des U, welches das erste Rastmittel (4) bildet.

4. Vorrichtung nach Anspruch 1, **dadurch gekennzeichnet, dass** die gebogenen Haken, die das zweite Rastmittel (6) zum Montieren an der entsprechenden Kralle (2) bilden, mit einer länglichen Aussparung (2") der Kralle (2) zusammenwirken, deren Breite etwas größer ist als der gebogene Abschnitt der Haken (6), der sich parallel zu den gebogenen Abschnitten der Arme erstreckt, die den Körper der Vorrichtung (3) bilden.

5. Vorrichtung nach Anspruch 4, **dadurch gekennzeichnet, dass** die Aussparung (2") sich in vorteilhafter Weise in einen verengten Abschnitt der Kralle (2) erstreckt, entfernt von dem Ende, welches die Zähne (2') aufweist, die sich in die Wände der Einbaudose (2) eingraben sollen, nahe dem mittels Schraube zu betätigenden Ende.

6. Vorrichtung nach einem der Ansprüche 1 und 5, **dadurch gekennzeichnet, dass** die Arme, die den Körper der Vorrichtung (3) bilden und das erste Rastmontagemittel (4) am Gerätegehäuse (1) mit dem zweiten Rastmittel (6) zum Montieren an der Kralle (2) verbinden, einen Abstand aufweisen, der etwas größer ist als die größte Breite der Kralle (2), die sich zwischen den Zähnen (2') und dem die Aussparung (2") umfassenden verengten Abschnitt erstreckt.
